# NEUE EUROPÄISCHE PATENTSCHRIFT

(11) **EP 0 384 282 B2**
(45) Veröffentlichungstag und Bekanntmachung des Hinweises auf die Entscheidung über den Einspruch: **03.11.1999**
(45) Hinweis auf die Patenterteilung: 29.03.1995
(21) Anmeldenummer: 90102866.2
(22) Anmeldetag: 14.02.1990
(51) Int. Cl.: C10M 105/60, C10M 173/02

(54) **Verwendung von sekundären Aminen als Kettengleitmittel.**
Use of secundary amines as Lubricant for chain Use of secondary and tertiay amines as lubricant for conveyor.
Utilisation d'amines secondaires en tant que lubrifiant pour convoyeur.

(30) Priorität: 23.02.1989 DE 3905548
(43) Veröffentlichungstag der Anmeldung: 29.08.1990
(73) Patentinhaber: Henkel Kommanditgesellschaft auf Aktien, 40191 Düsseldorf (DE)
(72) Erfinder: Schmitz, Karl-Heinz, D-4000 Düsseldorf 13 (DE); Grosse Böwing, Walter, Dr., D-4047 Dormagen 5 (DE); Falter, Wolfgang, Dr., B-4731 Lichtenbusch (BE)

(56) Entgegenhaltungen:
- EP-A- 0 372 628
- DE-A- 3 631 953
- US-A- 3 574 100
- US-A- 3 718 588
- Chemical Abstract [1990] AN: 90-89877 [ZA-A-7707258]
- Getränkeindustrie 10/91, "Korrosionsproblematik oder Aufgrauung" von A. Laufenberg und T. Wershofen , Vol.45, 10.Oktober 1991, Seiten 774-781
- Handbuch der Henkel Hygiene GmbH "P3-Hygiene bei der Lebensmittelherstellung /Hygiene in der Brauerei" aus dem Jahre 1991, Kapitel 2:"Vergleichende Produktgegenüberstellung"

## Beschreibung

Die vorliegende Erfindung betrifft die Verwendung von sekundären Aminen und/oder Salzen derartiger Amine, gegebenenfalls zusammen mit üblichen Verdünnungsmitteln oder Hilfs- oder Zusatzstoffen, als Kettengleitmittel für automatische Ketten- und Bandschmieranlagen in der Lebensmittelindustrie, die zum Transport von Kunststoffgebinden aus Polyethylenterephthalat dienen.

Insbesondere finden derartige Kettengleitmittel oder Schmiermittel hierbei Verwendung zum Schmieren, Reinigen und Desinfizieren von automatischen Ketten- und Bandschmieranlagen, die beim Abfüllen von Lebensmitteln, vorzugsweise Getränken, in Kunststoffflaschen eingesetzt werden.

In Flaschenkellern und Faßkellern von Getränkebetrieben sowie bei der Abfüllung von Lebensmitteln werden für den Transport der entsprechenden Gefäße üblicherweise Plattentransportbänder oder andere Förderanlagen benutzt, die mit geeigneten wäßrigen Schmiermittelzubereitungen über Tauchschmieranlagen oder neuerdings auch über automatische Bandschmiersysteme geschmiert und sauber gehalten werden.

Während Tauchschmieranlagen kaum Probleme hinsichtlich der anwendungstechnischen Eigenschaften bei der Wahl des Schmiermittels bereiten, sind es Ausfällungen schwerlöslicher Salze und mikrobiologische Ablagerungen, die in den Düsen und Filtern der zentralen Schmieranlagen den kontinuierlichen Betrieb des Abfüllens von Lebensmitteln, insbesondere Getränken, beträchtlich stören können, so daß die Anlagen nach einer gewissen Betriebsdauer stets abgeschaltet und gereinigt werden müssen.

Die bisher als Schmiermittel eingesetzten Kettengleitmittel basieren einerseits auf Fettsäuren in Form ihrer wasserlöslichen Alkali- oder Alkanolaminsalze oder auf Fettaminen in Form ihrer organischen oder anorganischen Salze.

Während beide Substanzklassen in der Tauchschmierung problemlos anwendbar sind, zeigen sie in den heute üblichen zentralen Kettenschmiersystemen eine Reihe von Nachteilen. So beschreibt die DE-A-23 13 330 Schmiermittel auf Seifenbasis, die wäßrige Mischungen von C₁₆-C₁₈-Fettsäuresalzen und oberflächenaktiven Substanzen enthalten. Derartige Schmiermittel auf Seifenbasis weisen folgende Nachteile auf:
1. Es kommt zu einer Reaktion mit der Wasserhärte, also den Erdalkali-lonen, und anderen Wasserinhaltsstoffen unter Bildung schwerlöslichen Metallseifen, den sogenannten primären Erdalkaliseifen.
2. Es kommt zu einer Reaktion zwischen diesen Schmiermitteln auf Seifenbasis und in Wasser oder dem abzufüllenden Gut gelöstem Kohlendioxid.
3. Die so erzeugte Anwendungslösung ist stets keimfördernd.
4. Bei Anwendung von hartem Wasser sind Ionenaustauscher a!s zusätzliche Keimquelle oder der Einsatz hoch komplexierungsmittelhaltiger Produkte erforderlich, was wiederum ökologisch bedenklich ist.
5. Es Kommt zu vermehrter Schaumbildung, was insbesondere Probleme am Bottle-Inspector (automatische Flaschenkontrolle) hervorruft und zu einem eventuellen Eindringen dieser Schmiermittel in das Transportbehältnis führt.
6. Die meisten dieser Produkte sind lösungsmittelhaltig.
7. Die Reinigungswirkung dieser Produkte ist schlecht, so daß eine separate diskontinuierliche Reinigung stets notwendig ist.
8. Derartige Schmiermittelzubereitungen auf Seifenbasis zeigen ein pH-abhängiges Leistungsverhalten.
9. Schmiermittelzubereitungen auf Seifenbasis zeigen weiterhin eine Wassertemperatur-Abhängigkeit.
10. Schmiermittel auf Seifenbasis zeigen nur eine geringe Lagerstabilität, insbesondere bei niederen Temperaturen.
11. Das in vielen Produkten enthaltene EDTA (Ethylendiamintetraacetat) ist bekanntermaßen nur schlecht biologisch abbaubar.
12. Derartige Schmiermittelzubereitungen auf Seifenbasis sind nicht für alle Transportgüter aus Kunststoff geeignet, da es bei Anwendung dieser Mittel in vielen Fällen zu Spannungsrißkorrosionen am Transportgut kommt.

Neben diesen Schmiermitteln auf Seifenbasis werden ansonsten hauptsächlich solche auf Basis von primären Fettaminen verwendet. So beschreibt die DE-A-36 31 953 ein Verfahren zum Schmieren von kettenförmigen Flaschentransportbändern in Getränkeabfüllbetrieben, insbesondere in Brauereien, sowie zum Reinigen der Bänder mittels eines flüssigen Reinigungsmittels, das dadurch gekennzeichnet ist, daß man die kettenförmigen Flaschentransportbänder mit Bandschmiermitteln auf Basis neutralisierter primärer Fettamine, die vorzugsweise 12 bis 18 C-Atome aufweisen und einen ungesättigten Anteil von mehr als 10 % enthalten, schmiert und die Flaschentransportbänder mit kationischen Reinigungsmitteln, nämlich quaternären Ammoniumverbindungen wie Alkyltrimethylammonium-, Dialkyldimethylammonium, und Alkyldimethylbenzylammoniumchloriden oder organischen Säuren reinigt.

Die Hauptnachteile dieses Verfahrens sind:
1. Die Reaktion mit Anionen des Wassers, insbesondere mit Sulfaten, Bicarbonaten, Phosphaten und Carbonaten aus alkalischen Wässern sowie anderen Wasserinhaltsstoffen.
2. Eine starke Reaktion mit in Wasser gelöster Kohlensäure zu schwerlöslichen Ammoniumcarbonaten, beispielsweise bei kohlensäurehaltigen Getränken.
3. Es müssen zwangsläufig Lösungsvermittler eingesetzt werden.
4. Die Reinigung des Sprüh- und Verteilsystems ist in regelmäßigen Abständen notwendig: ansonsten verstopft das gesamte System und wird somit unbrauchbar.
5. Bei Schmiermitteln auf Basis von primären Fettaminen ist kein kontinuierlicher 24-Stunden-Betrieb möglich.
6. Der Einsatz von korrosionsfördernden und ätzenden Säuren zur Systemreinigung führt bei den zum Teil nur aus Chromstählen oder Buntmetallen bestehenden Bestandteilen des Sprühsystems zu Korrosionsschäden.
7. Für die regelmäßige Reinigung des Sprüh- und Verteilsystems ist stets ein hoher apparativer Aufwand erforderlich.
8. Bei der Verwendung derartiger primärer Fettamine als Schmiermittel können die Anlagen nur mit einer geringen Flexibilität gefahren werden bzw. in vielen Fällen läßt sich dieses Verfahren nicht anwenden, da in bestehenden Anlagen oftmals Vormischbehälter vorhanden sind.
9. Der Einsatz von primären Fettaminen und die hierfür erforderlichen zwei Verfahrensschritte - einerseits Schmieren, andererseits Reinigen - erfordern hohe apparative Investitionskosten.
10. Schließlich ergibt sich durch den Einsatz der primären Amine und der niederen Alkylsäuren, wie beispielsweise Essigsäure, die für den Reinigungsschritt erforderlich sind, auch eine erhebliche Geruchsbelästigung.

Die Hauptnachteile der oben genannten Verfahren sind somit einerseits die starke Wasserabhängigkeit der Schmiermittel auf Seifenbasis und die regelmäßig notwendige Systemreinigung beim Einsatz von Schmiermitteln auf Basis von primären Aminen. Die Ausfällungen, die in beiden Verfahren des Standes der Technik auftreten, müssen dabei entfernt werden. Zur Entfernung benutzt man eine einfache Säure-Base-Reaktion. Im Falle der Seifenprodukte auf Fettsäurebasis werden hierzu alkalische, komplexmittelhaltige Reiniger eingesetzt und als technische Äquivalente dazu werden bei Produkten auf Basis primärer Fettamine organische oder anorganische Säuren als Reiniger eingesetzt.

Schließlich sind im Stand der Technik weitere Kettenschmiermittel, bekannt, die die vorstehend beschriebenen Nachteile nicht aufweisen. So beschreibt die EP-B-0 044 458 Schmiermittelzubereitungen. die praktisch frei von Fettsäureseifen sind und die weiterhin ein carboxyliertes nichtionisches Tensid und ein Acylsarcosinat enthalten. Der pH-Wert dieser Produkte beträgt 7 bis 11 und liegt somit vorzugsweise im neutralen bis alkalischen Bereich.

Die DE-A-38 31 448 betrifft schließlich wäßrige, klarwasserlösliche, seifenfreie Schmiermittelzubereitungen, ein Verfahren zu ihrer Herstellung und die Verwendung der erfindungsgemäßen Schmiermittelzubereitungen insbesondere als Schmiermittel zum Transport von Glasflaschen oder PolyethylenterephthalatFlaschen. Die im wesentlichen neutralen wäßrigen Schmiermittelzubereitungen (pH im Bereich von 6 bis 8) enthalten Alkylbenzolsulfonate, alkoxylierte Alkanolphosphate und Alkancarbonsäuren, gegebenenfalls neben üblichen Lösungsvermittlern, Lösungsmitteln, Entschäumungsmitteln und Desinfektionsmitteln.

Allerdings zeigen auch diese beiden oben beschriebenen Produkte noch folgende drei Nachteile:
1. Sie sind mikrobiologisch ungünstig, da sie hervorragende Wachstumsbedingungen für Mikroorganismen schaffen.
2. Weiterhin zeigen sie nur eine geringe Reinigungskraft.
3. Schließlich weisen sie ein schwer zu kontrollierendes Schaumverhalten auf.

Ferner werden in der US-A-3 718 588 Schmiermittel für Transportbänder in Flaschenfüllanlagen beschrieben, die neben Wasser ein Salz eines Phosphatesters enthalten. Diese Phosphatester basieren auf Orthophosphorsäure, kondensierten Phosphorsäuren oder Polyphosphorsäuren, bei welchen mindestens eine Säuregruppe mit einer Alkoholgruppe verestert ist und mindestens eine Säuregruppe in Salzform vorliegt. Als salzbildende Kationen kommen hierbei Alkalimetalle oder Amine, beispielsweise Monoamine, wie primäre, sekundäre und tertiäre Amine, cyclische Amine, Polyamine, cyclische Amidine oder oxalkylierte Amine in Frage.

Gegenstand der US-A-3 754 100 sind gleichfalls Schmiermittel für Transportbänder in Flaschenfüllanlagen. Diese Schmiermittel bestehen aus einer wäßrigen Lösung eines Phosphatesters eines ethoxylierten Oleylalkohols und/oder einer amphoteren Verbindung, ausgewählt aus speziellen Imidazolinderivaten, N-Fettalkyl-beta-aminopropionaten und N-Fettalkyl-beta-iminodipropionaten.

Schließlich betrifft die EP-A-0 372 628 wäßrige Schmiermittellösungen für Flaschentransportbänder, enthaltend mindestens ein Fettalkylamin der allgemeinen Formeln (R₁)N(R₂)-A-NH₂ oder (R₁)N(R₂)-A₁-COOH, mit R₁ = gesättigter oder ungesättigter, verzweigter oder linearer Alkylrest mit 8 bis 22 C-Atomen, R₂ = Wasserstoff, Alkyl- oder Hydroxyalkylrest mit 1 bis 4 C-Atomen oder -A-NH₂, A = linearer oder verzweigter Alkylenrest mit 1 bis 8 C-Atomen, A₁ = linearer oder verzweigter Alkylenrest mit 2 bis 4 C-Atomen, wobei die Schmiermittellösungen einen pH-Wert im Bereich von 5 bis 8 aufweisen. Zusätzlich können derartige Schmiermittellösungen Fettalkyl-monoamine der allgemeinen Formel (R₃)N(R₄)(R₅), mit R₃ = gesättigter oder ungesättigter, verzweigter oder linearer Alkylrest mit 8 bis 22 C-Atomen. R₄ = Wasserstoff oder Alkyl- oder Hydroxyalkylrest mit 1 bis 4 C-Atomen, R₅ = R₃ oder R₄, enthalten.

Der vorliegenden Erfindung liegt demgegenüber die Aufgabe zugrunde, Kettengleitmittel - nachstehend auch als Schmiermittel bezeichnet - für automatische Ketten- und Bandschmieranlagen, die zum Transport von Kunststoffgebinden dienen, bereitzustellen. Diese Kettengleitmittel sollten die Nachteile der aus dem Stand der Technik bekannten Mittel nicht aufweisen, sondern vielmehr einen guten Reibwert, eine ausgezeichnete Schmierwirkung, ein geringes Schaumverhalten, eine gute Reinigungswirkung und eine gute mikrobizide Wirkung.

Dementsprechnd betrifft die vorliegende Erfindung die Verwendung von sekundären Aminen und/oder Salzen derartiger Amine der allgemeinen Formeln (Ia), (Ib), und (Ic)

R-NH-(CH₂)₃NH₂ (Ia)

R-NH-(CH₂)₃N⁺H₃X⁻ (Ib)

R-N⁺H₂-(CH₂)₃-N⁺H₃2X⁻ (Ib)

wobei die Reste R jeweils bedeuten:
einen linearen oder verzweigten, gesättigten oder einfach oder mehrfach ungesättigten Alkylrest mit 12 bis 18 C-Atomen,
X⁻ ein Anion aus der Gruppe Amidosulfonat, Nitrat, Halogenid, Sulfat, Hydrogencarbonat, Carbonat. Phosphat oder R¹-COO⁻ bedeutet, wobei der Rest R¹ für
- Wasserstoff,
- einen substituierten oder unsubstituierten, linearen oder verzweigten Alkylrest mit 1 bis 20 C-Atomen oder Alkenylrest mit 2 bis 20 C-Atomen, die als Substituenten mindestens einen Hydroxy-, Amin- oder Iminrest aufweisen konnen, oder
- einen substituierten oder unsubstituierten Phenylrest, der als Substituenten einen Alkylrest mit 1 bis 20 C-Atomen aufweisen kann, steht,
in Mengen von 1 bis 100 Gew.-%, gegebenenfalls zusammen mit üblichen Verdünnungsmitteln oder Hilfs- und Zusatzstoffen, als Kettengleitmittel für automatische Ketten- und Bandschmieranlagen in der Lebensmittelindustrie, die zum Transport von Kunststoffgebinden aus Polyethylenterephthalat dienen.

Die erfindüngsgemäß zü verwendenden Amine zeigen in Form ihrer wäßrigen Lösungen entweder eine Klarlöslichkeit oder eine Opaleszenz.

Hinsichtlich ihrer Anwendungseigenschaften zeigen die erfindungsgemäß zü verwendenden Amine einen guten Reibwert, ein geringes Schaumverhalten eine gute Reinigungswirkung sowie gute mikrobizide Eigenschaften.

In den vorstehend genannten allgemeinen Formeln (Ia) (Ib) und (Ic) kommen als Substituent R somit die folgenden Reste in Frage: n-Dodecyl, n-Tridecyl, n-Tetradecyl, n-Pentadecyl, n-Hexadecyl, n-Heptadecyl, n-Octadecyl, sowie die verzweigtkettigen Isomere der genannten Alkylreste. Anstelle der gesättigten Alkylreste kann R auch die entsprechenden - einfach oder mehrfach - ungesättigten Alkylreste bedeuten, die gleichfalls linear oder verzweigt sein können.

Als Beispiele für organische Anionen X⁻ vom Typ R¹-COO⁻ seien genannt: Formiat, Acetat, Oleat, Glycolat, Lactat, Gluconat, Benzoat und Salicylat.

Als Beispiele für sekundäre Diamine vom Typ der allgemeinen Formeln (Ia), (Ib) und (Ic), die im Rahmen der vorliegenden Erfindung bevorzugt sind, seien genannt: N-Lauryl-propylendiamin und N-Talgfettalkyl-propylendiamin, jeweils in Form der freien Amine sowie in Form der Acetat-Salze.

Sekundäre Amine, die den vorstehend angegebenen allgemeinen Formeln entsprechen, können nach literaturbekannten Verahren hergestellt werden und werden im übrigen auch zum Teil als Handelsprodukte angeboten, beispielsweise von der Firma Hoechst AG, Frankfurt am Main, Deutschland, unter der Bezeichnung GENAMIN^{R}.
- X⁻ steht vorzugsweise für den Rest R¹-COO⁻, wobei R¹ Wasserstoff, CH₃-, HO-CH₂- oder CH₃-CH(OH)- bedeutet.

Im Sinne der Erfindung werden ferner solche Formülierüngen bevorzugte eingesetzt, die
5 bis 40 Gew.-%, insbesondere 10 bis 20 Gew.-%, an sekundären Aminen und/oder Salzen derartiger Amine sowie
95 bis 60 Gew.-% insbesondere 90 bis 80 Gew.-%, Wasser als Verdünnungsmittel und gegebenenfalls Hilfs- bzw. Zusatzstoffe,
jeweils bezogen auf die Gesamtformulierung, enthalten.

Als Hilfs- und oder Zusatzstoffe im Sinne der vorliegenden Erfindung kommen insbesondere Lösungsvermittler in Betracht, beispielsweise Alkohole, Polyalkohole, Ether oder Polyether, insbesondere Isopropanol. Butylglykol, Butyldiglykol oder Ethylenglykolether. Die Menge des zu verwendenden Lösungsvermittlers richtet sich im Einzelfall nach dem eingesetzten Amin, der Fachmann wird im Einzelfall die erforderliche Menge an Lösungsvermittler durch Ausprobieren ermitteln. Im allgemeinen sind Zusätze an Lösungsvermittler im Bereich von 5 bis 20 Gew.-%, bezogen auf die Gesamtformulierung, hinreichend.

Als Hilfs- und oder Zusatzstoffe im Sinne der vorliegenden Erfindung kommen ferner insbesondere nichtionische und oder anionische Tenside in Betracht, beispielsweise alkoxylierte Fettamine, Fettalkohole, alkoxylierte Fettalkohole und in hydrophilen Lösungsmitteln lösliche Alkylbenzolsulfonate. Diese Tenside können die Benetzung der Ketten und Plattentransportbänder verbessern, sofern dies im Einzelfall erforderlich sein sollte. Im allgemeinen sind Tensid-Zusätze im Bereich von 5 bis 10 Gew.-%, bezogen auf die Gesamtformulierung, hierfür ausreichend.

Die erfindungsgemäß zü verwendenden Formülierüngen weisen vorzugsweise einen pH-Wert im Bereich von 4 bis 11, insbesondere im Bereich von 5 bis 8, auf. Sofern der pH-Wert der Formülierüngen nicht bereits in diesem Bereich liegt, kann er durch Zugabe einer Säure, vorzugsweise einer Säure mit dem vorstehend definierten Anion X-, beispielsweise mit Essigsäure oder Ameisensäure, auf den gewünschten Wert eingestellt werden.

Im Sinne der Erfindung ist es ferner bevorzugt, daß die erfindüngsgemäß zü verwendenden Formülierüngen eine dynamische Viskosität von weniger als 300 mPa.s, insbesondere von weniger als 150 mPa.s und besonders bevorzugt im Bereich von 20 bis 100 mPa.s - jeweils bei 20 °C - aufweisen. Eine gesonderte Einstellung der Viskosität auf die genannten Werte ist im allgemeinen nicht erforderlich bzw. erfolgt gegebenenfalls durch Zusatz geeigneter Mengen des Verdünnungsmittels Wasser oder eines Lösungsvermittlers.

Die erfindungsgemäß zü verwendenden Formülierüngen lassen sich durch einfaches Vermischen der Aminkomponenten, gegebenenfalls unter Zusatz von Wasser und der genannten Hilfs- bzw Zusatzstoffe, herstellen.

Gemäß einer besonders bevorzugten Ausführungsform der vorliegenden Erfindung werden Formülierüngen verwendet, die
a) 2 bis 10 Gew.-% eines sekundären Amins der allgemeinen Formeln (Ib) und (Ic),
b) 2 bis 10 Gew.-% eines tertiären Amins der allgemeinen Formeln (IIIb) und/oder (IVb)

   R-N⁺HR³R⁴X⁻ (IIIb)

   R-N⁺H(CH₃)₂X⁻ (IVb)
c) Rest: Wasser und gegebenenfalls Hilfs- bzw. Zusatzstoffe,
enthalten, wobei
die Reste R³ und R⁴ jeweils unabhängig voneinander bedeuten;
einen substituierten oder unsubstituierten, linearen oder verzweigten Alkylrest mit 1 bis 20 C-Atomen oder Alkenylrest mit 2 bis 20 C-Atomen, die als Substituenten mindestens einen Hydroxy-, Amin- oder Iminrest aufweisen können, oder
einen substituierten oder unsubstituierten Phenylrest, der als Substituenten einen Alkylrest mit 1 bis 20 C-Atomen aufweisen kann,
R und X⁻ die vorstehend genannte Bedeutung haben und
wobei die Komponenten a und b im Gewichtsverhältnis von a zu b wie 1:2 bis 3 : 1, vorzugsweise 2 : 1, vorliegen. Eine solche Kombination erweist sich im Hinblick auf Schmierwirkung und Schauminhibierung als besonders wirkungsvoll. Als Beispiel für eine solche Kombination sei auf das nachfolgende Beispiel 5 verwiesen.

Die erfindungsgemäß zü verwendenden Amine verursachen im Gegensatz zu Standard-Seifenprodukten keine Spannungsrißkorrosion und können daher für PET-Gebinde problemlos eingesetzt werden. (PET = Polyethylenterephthalat). Besonders bevorzugt für klar-wasserlösliche Konzentrate sind pH-Werte < 8.5.

Beim Einsatz auf Transportbändern in der Lebensmittelindustrie kann mit den erfindüngsgemäß zü verwendenden Aminen ein zusätzlicher Nutzen erzielt werden. Ersetzt man die Formülierüngen am Ende der Produktion durch ein Reinigungsmittel auf Basis organischer oder anorganischer Säuren und läßt die Transporteure, d.h Ketten oder Bänder, beim Verteilen der Säure laufen, so bildet sich ein sahniger Schaum auf den Bändern und an sonst nur schwer zugänglichen Stellen. Nach einer hinreichenden Einwirkzeit kann der Schaum mit Wasser über das gleiche System abgespült werden. Durch dieses automatische Verfahren kann die sonst häufig regelmäßig durchgeführte manuelle "Einschäumung" und Abspülung mit Nieder-, Mittel- und Hochdruckschaumgeräten entfallen.

### Beispiele

Die vorliegende Erfindung wird durch die nachfolgenden Beispiele näher erläutert. In den erfindungsgemäßen Beispielen 1 und 2 und 5 bis 11 werden der Reibungswiderstand und das Schaumverhalten von erfindungsgemäß zü verwendenden Formulierungen aufgezeigt. Die Beispiele 3 und 4 zeigen die gute mikrobizide Wirksamkeit von erfindungsgemäß zü verwendenden Formulierungen. Zum Vergleich dienen die Vergleichsbeispiele 1 bis 6, welche Produkte des Standes der Technik betreffen.

Alle Prozentangaben in den nachstehenden Formulierungs-Beispielen beziehen sich auf Gewichtsprozente.

Die Versuche zur Messung des Reibungswiderstandes, im folgenden kurz "Reibwert" genannt, sind auf einem Technikums-Flaschentransportband unter folgenden Bedingungen durchgeführt worden:

Messung des Reibwiderstandes von 20 mit Wasser gefüllten 0.5 l Euro-Bierflaschen als Zugspannung mit einem Dynamometer.
Flaschentransportgeschwindigkeit: ca 1 m/s
Besprüchen des Flaschentransportbandes mit 0.3 %iger Bandschmiermittellösung.
Takzeiten: 20 s Sprühen 20 s Pau.
Sprühleistung der Düsen: 5 l/h.

Der im folgenden angegebene Reibwert "µ" ergibt sich als der Quotient der gemessenen Zugspannung für eine Flasche zum Gewicht der Flasche in Gramm.sser (16 °d) nach den Bestimmungen der DIN 53 902 getestet.

Das Schaumverhalten wird nach folgenden Klassen beurteilt:
0 = schaumfrei
1 vereinzelte Schaumblasen
2 = geringes Schäumen, nicht störend
3 = Schäumen, störend
4 = starkes Schäumen, nicht akzeptabel, Schaum unter dem Band

### Beispiel 1:

15 % Lauryl-propylendiamin
85 % Wasser
Reibwert: µ = 0,11, Schaumverhalten = 1-2

### Beispiel 2:

15 % Lauryl-propylendiammoniumacetat
85 % Wasser
Reibwert: µ = 0,11, Schaumverhalten = 1-2

### Vergleichsbeispiel 1:

### (Seifenprodukt nach DE-A-23 13 330)

14 % Fettsäure mit einer Kettenverteilung von 18 % C14-18, 25 %
C-18', 48 % C-18", 7 % C-18"' und 2 % C-20⁺ 4 % KOH
12 % Triethanolamin
15 % Dodecylbenzosulfonat-triethanolaminsalz
3 % Ethylendiamin-30EO-60PO
1 % Oleyl-Cetylalkohol
3 % Monoethanolamin
2 % Ethylendiamintetraacetat (EDTA)
5 % iso-Propanol
41 % Wasser
Reibwert: µ = 0.11 Schaumverhalten = 4

### Vergleichsbeispiel 2:

### (Fettaminprodukt nach DE-A-36 31 953)

18 % Essigsäure
50 % Cocosamin
11 % Triethanolamin
5 % Nonylphenol-10-EO
16 % Wasser
Reibwert: µ = 0,09, Schaumverhalten = 0

### Vergleichsbeispiel 3

### (seifenfreie Produkte, nach DE-A-38 31 448)

12 % C_{12/18}-Fettalkohol-10-EO-phosphat
9 % Dodecylsulfonat
10 % Harnstoff
10 % iso-Propanol
59 % Wasser
Reibwert: µ = 0,10, Schaumverhalten = 2
Für die vorstehenden Vergleichsbeispiele gilt: EO = Ethylenoxid, PO = Propylenoxid.

Die Reinigungswirkung der Produkte auf den Bändern ist visuell als gut zu beurteilen bei den Beispieien 1, 2 ungenügend dagegen bei den Vergleichsbeispielen 1 und 3.

Alle vorgestellten Formülierüngen sind zum kommerziellen Einsatz geeignet, da der Reibwert µ < 0.15 ist.

### Desinfektionswirkung:

Die erfindungsgemäß zü verwendenden Amine zeigen eine ausgesprochen gute mikrobizide Wirksamkeit, wie anhand der durchgeführten Suspensionstests nach DVG (Deutsche Veterinärmedizinische Gesellschaft) gezeigt werden soll:

### Beispiel 3:

Lauryl-propylendiamin (15 Gew.-% in Wasser), gemäß Beispiel 1

| Teststämme | Keimzahl | Abtötungszeiten in Minuten bei 20 °C Konzentration in %: | | | |
|---|---|---|---|---|---|
| | | 0,07 | 0,33 | 0,66 | 1,67 |
| Staphylococcus aureus K 3212 | 4x10⁸ | 5 | 5 | 5 | 5 |
| Streptococcus faecium K 3343 | 5x10⁸ | 5 | 5 | 5 | 5 |
| Proteus mirabilis K 2910 | 5x10⁸ | 5 | 5 | 5 | 5 |
| Pseudomonas K 1111 | 1x10⁹ | 15 | 5 | 5 | 5 |
| Escherichia Coli K 2114 | 6x10⁸ | 15 | 5 | 5 | 5 |
| Candida albicans K 6710 | 1x10⁸ | 15 | 5 | 5 | 5 |

### Beispiel 4:

Lauryl-propylendiammoniumacetat (15 Gew.-% in Wasser), gemäß Beispiel 2

| Teststämme | Keimzahl | Abtötungszeiten in Minuten bei 20 °C Konzentration in %: | | | |
|---|---|---|---|---|---|
| | | 0,07 | 0,33 | 0,66 | 1,67 |
| Staphylococcus aureus K 3212 | 9x10⁸ | 5 | 5 | 5 | 5 |
| Streptococcus faecium K 3343 | 6x10⁸ | 5 | 5 | 5 | 5 |
| Proteus mirabilis K 2910 | 1x10⁹ | 5 | 5 | 5 | 5 |
| Pseudomonas K 1111 | 8x10⁸ | 5 | 5 | 5 | 5 |
| Escherichia Coli K 2114 | 4x10⁸ | 5 | 5 | 5 | 5 |
| Candida albicans K 6710 | 3x10⁸ | 5 | 5 | 5 | 5 |

### Vergleichsbeispiel 4:

### (Zusammensetzung siehe Vergleichsbeispiel 1)

| Teststämme | Keimzahl | Abtötungszeiten in Minuten bei 20 °C Konzentration: 0,33 % |
|---|---|---|
| Pseudomonas K 1111 | 3x10⁸ | > 60 |
| Escherichia Coli K 2114 | 2x10⁸ | > 60 |
| Klebsiella aerogenes K 2530 | 5x10⁸ | > 60 |
| Lactobacillus brevis K 4111 | 4x10⁸ | > 60 |
| Saccharomyces cerev. K 5011 | 3x10⁷ | > 60 |
| Hansenula anomala K 5411 | 5x10⁷ | > 60 |
| Aspergillus niger K 7441 | 9x10⁶ | > 60 |

### Vergleichsbeispiel 5:

### (Zusammensetzung siehe Vergleichsbeispiel 2)

Suspensionstest nach DLG (Deutsche Lebensmittel-Gesellschaft) bei 20 °C

| Teststämme | Keimzahl | Abtötungszeiten in Minuten bei 20 °C Konzentration: 0,3 % |
|---|---|---|
| Pseudomonas K 1111 | 3x10⁸ | 1 |
| Escherichia Coli K 2114 | 2x10⁸ | 1 |
| Klebsiella aerogenes K 2530 | 5x10⁸ | 1 |
| Lactobacillus brevis K 4111 | 4x10⁸ | 1 |
| Saccharomyces cerev. K 5011 | 3x10⁷ | 2,5 |
| Hansenula anomala K 5411 | 5x10⁷ | 10 |
| Aspergillus niger K 7441 | 9x10⁶ | 20 |

### Vergleichsbeispiel 6:

### (Zusammensetzung siehe Vergleichsbeispiel 3)

| Teststämme | Keimzahl | Abtötungszeiten in Minuten bei 20 °C Konzentration: 0,3 % |
|---|---|---|
| Pseudomonas K 1111 | 3x10⁸ | > 60 |
| Escherichia Coli K 2114 | 2x10⁸ | > 60 |
| Klebsiella aerogenes K 2530 | 5x10⁸ | > 60 |
| Lactobacillus brevis K 4111 | 4x10⁸ | > 60 |
| Saccharomyces cerev. K 5011 | 3x10⁷ | > 60 |
| Hansenula anomala K 5411 | 5x10⁷ | > 60 |
| Aspergillus niger K 7441 | 9x10⁶ | > 60 |

Diese Werte zeigen, daß die erfindungsgemäß zü verwendenden Formülierüngen die Vorteile der seifenfreien Schmiermittel (wasserqualitätsunabhängig) mit denen der Schmiermittel auf Basis primärer Amine (Reinigung und Desinfektion) verbinden können. Die Nachteile, insbesondere die regelmäßige Entfernung von Niederschlägen, kann mit diesen erfindungsgemäß zü verwendenden Formülierüngen vehindert werden.

### Bespiel 5

10 % Lauryl-propylendiammoniumacetat
5 % N,N-Dimethyl-N-cetylammoniumacetat
85 % Wasser
Reibwert: µ = 0.09, Schaumverhalten = 0

### Beispiel 6:

8 % Lauryl-propylendiammoniumacetat
4 % N,N-Dipropyl-N-laurylammoniumacetat
88 % Wasser
Reibwert: µ = 0.12, Schaumverhalten = 2 - 3

### Beispiel 7:

8 % Lauryl-propylendiammoniumacetat
4 % N,N-Dimethyl-N-laurylammoniumacetat
88 % Wasser
Reibwert: µ = 0,10, Schaumverhalten = 0 - 1

### Beispiel 8:

8 % Lauryl-propylendiammoniumacetat
4 % N,N-Dimethyl-N-cocosfett-ammoniumacetat
88 % Wasser
Reibwert: µ = 0,11, Schaumverhalten = 1

### Beispiel 9:

8 % Lauryl-propylendiammoniumacetat
4 % N,N-Dimethyl-N-hexadecyl-ammoniumacetat
88 % Wasser
Reibwert: µ = 0,11, Schaumverhalten = 0

### Beispiel 10:

8 % Lauryl-propylendiammoniumacetat
4 % Talgfett-propylendiammoniumacetat
88 % Wasser
Reibwert: µ = 0,11, Schaumverhalten = 2

### Beispiel 11:

8 % N,N-Dipropyl-N-lauryl-ammoniumacetat
4 % Talgfett-propylendiammoniumacetat
88 % Wasser
Reibwert: µ = 0,11, Schaumverhalten = 2

## Patentansprüche

1. Verwendung von sekundären Aminen und/oder Salzen derartiger Amine der allgemeinen Formeln (Ia), (Ib), und (Ic)
R-NH-(CH₂)₃NH₂ (Ia)
R-NH-(CH₂)₃N⁺H₃X⁻ (Ib)
R-N⁺H₂-(CH₂)₃-N⁺H₃2X⁻ (Ic)
wobei die Reste R jeweils bedeuten:
einen linearen oder verzweigten, gesättigten oder einfach oder mehrfach ungesättigten Alkylrest mit 12 bis 18 C-Atomen,
X⁻ ein Anion aus der Gruppe Amidosulfonat, Nitrat, Halogenid, Sulfat, Hydrogencarbonat, Carbonat, Phosphat oder R¹-COO⁻ bedeutet, wobei der Rest R¹ für
- Wasserstoff,
- einen substituierten oder unsubstituierten, linearen oder verzweigten Alkylrest mit 1 bis 20 C-Atomen oder Alkenylrest mit 2 bis 20 C-Atomen, die als Substituenten mindestens einen Hydroxy-, Amin- oder Iminrest aufweisen können, oder
- einen substituierten oder unsubstituierten Phenylrest, der als Substituenten einen Alkylrest mit 1 bis 20 C-Atomen aufweisen kann, steht,
in Mengen von 1 bis 100 Gew.-%, gegebenenfalls zusammen mit üblichen Verdünnungsmitteln oder Hilfs- und Zusatzstoffen, als Kettengleitmittel für automatische Ketten- und Bandschmieranlagen in der Lebensmittelindustrie, die zum Transport von Kunststoffgebinden aus Polyethylenterephthalat dienen.

2. Verwendung nach Anspruch 1, dadurch gekennzeichnet, daß der Rest X⁻ in den allgemeinen Formeln die folgenden Bedeutungen aufweist:
- X⁻ steht für den Rest R¹-COO⁻, wobei R¹ Wasserstoff, CH₃-, HO-CH₂- oder CH₃-CH(OH)- bedeutet.

3. Verwendung nach einem oder mehreren der Ansprüche 1 oder 2, dadurch gekennzeichnet, daß man Formulierungen einsetzt, die
5 bis 40 Gew.-%, insbesondere 10 bis 20 Gew.-%, an Aminen und
95 bis 60 Gew.-%, insbesondere 90 bis 80 Gew.-%, Wasser und/oder Hilfs-bzw. Zusatzstoffe,
jeweils bezogen auf die Gesamtformulierung, enthalten.

4. Verwendung nach Anspruch 3, dadurch gekennzeichnet, daß man als Hilfs- oder Zusatzstoff Lösungsvermittler einsetzt.

5. Verwendung nach Anspruch 3, dadurch gekennzeichnet, daß man als Hilfs-oder Zusatzstoff nichtionische und/oder anionische Tenside einsetzt.

6. Verwendung nach einem oder mehreren der Ansprüche 1 bis 5, dadurch gekennzeichnet, daß man Formulierungen einsetzt, die einen pH-Wert im Bereich von 4 bis 11, vorzugsweise im Bereich von 5 bis 8, aufweisen.

7. Verwendung nach einem oder mehreren der Ansprüche 1 bis 5, dadurch gekennzeichnet, daß man Formulierungen einsetzt, die eine dynamische Viskosität von weniger als 300 mPa.s, vorzugsweise im Bereich von 20 bis 100 mPa.s aufweisen.

## Claims

1. The use of secondary amines and/or salts thereof corresponding to general formulae (Ia), (Ib) and (Ic):
R-NH-(CH₂)₃NH₂ (Ia)
R-NH-(CH₂)₃N⁺H₃ X⁻ (Ib)
R-N⁺H₂-(CH₂)₃-N⁺H₃ 2X⁻ (Ic)
in which the substituents R represent:
- a linear or branched, saturated or mono- or polyunsaturated alkyl radical containing 12 to 18 carbon atoms,
X⁻ is an anion from the group consisting of amidosulfonate, nitrate, halide, sulfate, hydrogen carbonate, carbonate, phosphate or R¹-COO⁻, where R¹ represents
- hydrogen,
- a substituted or unsubstituted, linear or branched alkyl radical containing 1 to 20 carbon atoms or alkenyl radical containing 2 to 20 carbon atoms which may contain at least one hydroxy, amine or imine group as substituent or
- a substituted or unsubstituted phenyl group which may contain an alkyl radical containing 1 to 20 carbon atoms as substituent,
in quantities of 1 to 100% by weight, optionally together with typical diluents or auxiliaries or additives, as chain lubricants for automatic chain and belt lubrication systems which are used for the transport of plastic containers of polyethylene terephthalate in the food industry.

2. The use claimed in claim 1, characterized in that X⁻ in the general formulae has the following meanings:
- X⁻ represents the group R¹-COO⁻ where R¹ is hydrogen, CH₃-, HO-CH₂- or CH₃-CH(OH)-.

3. The use claimed in one or more of claims 1 or 2, characterized in that formulations containing
5 to 40% by weight and more particularly 10 to 20% by weight of amines and
95 to 60% by weight and more particularly 90 to 80% by weight of water and/or auxiliaries or additives,
based on the formulation as a whole, are used.

4. The use claimed in claim 3, characterized in that solubilizers are used as the auxiliary or additive.

5. The use claimed in claim 3, characterized in that nonionic and/or anionic surfactants are used as the auxiliary or additive.

6. The use claimed in one or more of claims 1 to 5, characterized in that formulations with a pH value of 4 to 11 and preferably 5 to 8 are used.

7. The use claimed in one or more of claims 1 to 5, characterized in that formulations with a dynamic viscosity of less than 300 mPa.s and preferably in the range from 20 to 100 mPa.s are used.

## Revendications

1. Utilisation d'amines secondaires et/ou de sels d'amines de ce type répondant aux formules générales (Ia), (Ib) et (Ic)
R-NH-(CH₂)₃NH₂ (Ia)
R-NH-(CH₂)₃N⁺H₃X⁻ (Ib)
R-N⁺H₂-(CH₂)₃-N⁺H₃2X⁻ (Ic)
dans lesquelles
les radicaux R représentent respectivement un radical alkyle linéaire ou ramifié, saturé ou bien une fois ou plusieurs fois insaturé, contenant de 12 à 18 atomes de carbone,
X⁻ représente un anion choisi parmi le groupe comprenant les anions amidosulfonate, nitrate, halogénure, sulfate, hydrogéno-carbonate, carbonate, phosphate, ou bien un groupe R¹-COO⁻ dans lequel le radical R¹ représente
- un atome d'hydrogène,
- un radical alkyle contenant de 1 à 20 atomes de carbone ou un radical alcényle contenant de 2 à 20 atomes de carbone, linéaires ou ramifiés, substitués ou non substitués, qui peuvent présenter, à titre de substituants, au moins un radical hydroxyle, un radical amine ou un radical imine, ou
- un radical phényle substitué ou non substitué qui peut présenter, à titre de substituant, un radical alkyle contenant de 1 à 20 atomes de carbone,
dans des quantités de 1 à 100% en poids, le cas échéant de manière conjointe avec des diluants ou encore des adjuvants ou des additifs habituels, comme lubrifiants de chaînes pour des installations automatiques à chaînes et à bandes lubrifiées dans l'industrie alimentaire, qui servent au transport de récipients en matière synthétique en polyéthylène-téréphtalate.

2. Utilisation selon la revendication 1, caractérisée en ce que le radical X⁻, dans les formules générales, présente les significations ci-après :
- X⁻ représente le radical R¹-COO⁻ dans lequel R¹ représente un atome d'hydrogène, un groupe CH₃-, un groupe HO-CH₂- ou encore un groupe CH₃-CH(OH)-.

3. Utilisation selon les revendications 1 ou 2, caractérisée en ce qu'on met en oeuvre des formulations qui contiennent
de 5 à 40% en poids, en particulier de 10 à 20% en poids d'amines et
de 95 à 60% en poids, en particulier de 90 à 80% en poids d'eau et/ou d'adjuvants ou encore d'additifs,
chaque fois rapportés à la formulation totale.

4. Utilisation selon la revendication 3, caractérisée en ce que, comme adjuvant ou comme additif, on met en oeuvre un dissolvant.

5. Utilisation selon la revendication 3, caractérisée en ce que, comme adjuvant ou comme additif, on met en oeuvre des agents tensioactifs non ioniques et/ou anioniques.

6. Utilisation selon l'une ou plusieurs des revendications 1 à 5, caractérisée en ce qu'on met en oeuvre des formulations qui présentent une valeur de pH dans le domaine de 4 à 11, de préférence dans le domaine de 5 à 8.

7. Utilisation selon l'une ou plusieurs des revendications 1 à 5, caractérisée en ce qu'on met en oeuvre des formulations qui présentent une viscosité dynamique inférieure à 300 mPa.s, de préférence dans le domaine de 20 à 100 mPa.s.
